(19) Europäisches Patentamt
European Patent Office
Office européen des brevets

(11) **EP 0 610 543 B1**

(12) **EUROPÄISCHE PATENTSCHRIFT**

(45) Veröffentlichungstag und Bekanntmachung des Hinweises auf die Patenterteilung:
**04.12.1996 Patentblatt 1996/49**

(51) Int Cl.$^6$: **F16B 39/282**

(21) Anmeldenummer: **93114101.4**

(22) Anmeldetag: **02.09.1993**

(54) **Befestigungssystem**

Fastening system

Système de fixation

(84) Benannte Vertragsstaaten:
**DE FR GB IT**

(30) Priorität: **11.01.1993 DE 4300465**

(43) Veröffentlichungstag der Anmeldung:
**17.08.1994 Patentblatt 1994/33**

(73) Patentinhaber: **Nass Magnet GmbH**
**D-30179 Hannover (DE)**

(72) Erfinder: **Leuschner, Werner**
**D-3000 Hannover (DE)**

(74) Vertreter: **Tetzner, Volkmar, Dr.-Ing. Dr. jur.**
**Van-Gogh-Strasse 3**
**81479 München (DE)**

(56) Entgegenhaltungen:
**DD-A- 143 943          FR-A- 470 564**
**GB-A- 586 690**

**Beschreibung**

Die Erfindung betrifft ein Befestigungssystem entsprechend dem Oberbegriff des Anspruches 1, enthaltend eine Mutter und ein Gegenstück, wobei zur Verdrehsicherung der Mutter wenigstens zwei als Vorsprung und Vertiefung ineinandergreifende Befestigungselemente vorgesehen sind, wobei die Mutter aus elastischem Material besteht und einstückig mit einem der beiden Befestigungselemente ausgebildet ist.

Aus der Praxis ist ein Befestigungssystem bekannt, das eine metallische Mutter enthält, die eine Kunststoffhaube mit einer Rastnase aufweist. Diese Rastnase greift als Verdrehsicherung der Mutter in eine von mehreren Vertiefungen auf dem Gegenstück ein. Die federnd angebrachte Rastnase springt während des Festdrehens von einer Vertiefung zur anderen. Die festgedrehte Mutter wird durch die in eine Vertiefung eingreifende Rastnase in ausreichendem Maße vor unbeabsichtigtem Lösen, beispielsweise durch Vibrationen, gesichert. Soll die Mutter jedoch gelöst werden, so ist dies nur unter großem Kraftaufwand bzw. unter Zuhilfenahme eines Werkzeuges, mit dem die Rastnase aus der Vertiefung "gehebelt" wird, möglich.

Aus der Praxis ist es ferner bekannt, sogenannte Federscheiben als Verdrehsicherungen zu verwenden. Bei starken Vibrationen, wie sie beispielsweise bei Maschinen in der Automatisierungsbranche häufig auftreten, reicht eine Federscheibe jedoch nicht aus, um ein unbeabsichtigtes Lösen der Befestigungsmutter zu verhindern.

In der GB-A-586 690 wird ein Befestigungssystem beschrieben, das eine metallische Mutter mit Vorsprüngen aufweist, die in entsprechende Vertiefungen in einem Gegenstück eingreifen.

Aus der DD-A-143 943 ist ein Befestigungssystem gemäß dem Oberbegriff des Anspruches 1 bekannt, enthaltend eine Mutter und ein Gegenstück, wobei die Verdrehsicherung durch Vorsprünge und Vertiefungen gebildet wird, und die Mutter aus einem Kunststoff hergestellt ist.

Durch die aus elastischem Material und einstückig mit einem der beiden Befestigungselemente ausgebildete Mutter erhöht sich deren Flexibilität, so daß ein Festdrehen und Lösen der Mutter auf einfache Weise ermöglicht wird. Andererseits gewährleisten die ineinandergreifenden Befestigungselemente eine ausreichende Sicherung gegen ungewolltes Lösen der Mutter.

Der Erfindung liegt daher die Aufgabe zugrunde, das Befestigungssystem gemäß dem ersten Teil des Anspruchs 1 derart weiterzubilden, daß einerseits eine ausreichende Sicherung gegen ungewolltes Lösen der Mutter gewährleistet ist und andererseits das Festdrehen und Lösen der Mutter zusätzlich vereinfacht wird.

Diese Aufgabe wird durch die kennzeichnenden Merkmale des Anspruches 1 gelöst.

Weitere Ausgestaltungen der Erfindung sind Gegenstand der Unteransprüche und werden anhand der Zeichnung und der Erläuterung einiger Ausführungsbeispiele näher beschrieben.

In der Zeichnung zeigen:

Fig.1      eine Schnittdarstellung längs der Linie III-III der Fig.3 der Mutter eines ersten Ausführungsbeispieles,

Fig.2      eine Unteransicht der Mutter des ersten Ausführungsbeispieles,

Fig.3      eine Aufsicht der Mutter des ersten Ausführungsbeispieles,

Fig.4      eine Aufsicht des Gegenstücks,

Fig.5      eine geschnittene Detailansicht der Befestigungselemente des ersten Ausführungsbeispieles,

Fig.6      eine Schnittdarstellung der Mutter eines zweiten Ausführungsbeispieles,

Fig.7      eine Schnittdarstellung längs der Linie VI-VI der Fig.6,

Fig.8      eine geschnittene Detailansicht des zweiten Ausführungsbeispieles und

Fig.9      eine teilweise geschnittene Darstellung des Befestigungssystems einer Spule bei einem Magnetventil.

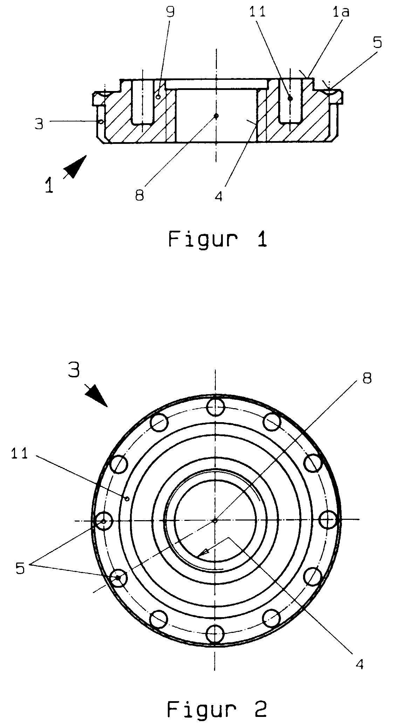

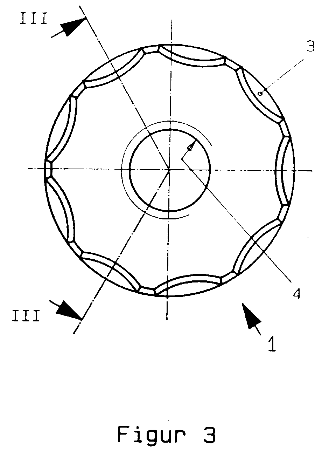

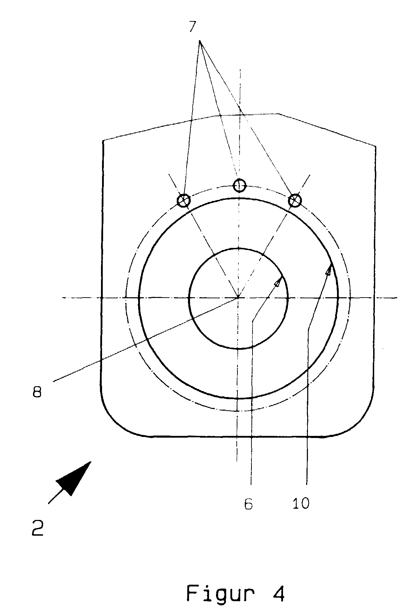

In den Fig.1 bis 5 wird zunächst ein erstes Ausführungsbeispiel eines Befestigungssystemes beschrieben. Es enthält eine in den Fig.1 bis 3 dargestellte Mutter 1 und ein in der Fig.4 dargestelltes Gegenstück 2. Die Mutter 1 ist nach Art einer Rändelmutter ausgebildet und weist zu diesem Zweck an ihrer radial äußeren Umfangsfläche eine Rändelung 3 auf. Die Mutter 1 sieht ferner eine mit einem Innengewinde versehene Durchgangsbohrung 4 vor.

Auf der mit dem Gegenstück 2 in Berührung kommenden Stirnfläche 1a der Mutter 1 ist im radial äußeren Bereich eine Vielzahl von einstückig mit der Mutter 1 ausgebildeten Befestigungselementen vorgesehen. Die Befestigungselemente werden im vorliegenden Ausführungsbeispiel durch Vertiefungen 5 gebildet.

Das in Fig.4 dargestellte Gegenstück 2 kann beispielsweise eine Befestigungsplatte, ein Gehäuseteil oder ein Teil einer mit einem anderen Teil zu verbindenden Anordnung darstellen. Dieses Gegenstück 2 weist ebenfalls eine Durchgangsbohrung 6 auf, durch die ein nicht dargestellter, mit einem Außengewinde versehener Teil durchgeschoben werden kann, um anschließend mit der Mutter 1 in Gewindeeingriff zu kommen. Demzufolge bildet die Mittelachse der Durchgangsbohrung 6 gleichzeitig die Mittelachse der Durchgangsbohrung 4 und somit die Drehachse 8 der Mutter 1.

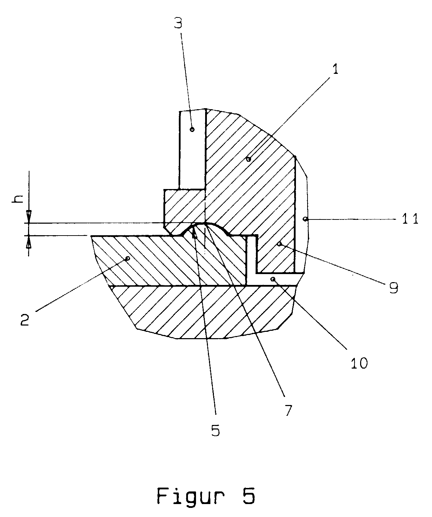

Auf dem Gegenstück 2 sind als Befestigungselemente Vorsprünge vorgesehen, die entsprechend gegenförmig zu den Vertiefungen 5 als Nocken 7 ausgebildet sind. Diese Nocken 7 werden zweckmäßig einstückig mit dem Gegenstück 2 ausgebildet. Im festgedrehten Zustand der Mutter 1 greifen die Nocken 7 in die Vertiefungen 5 ein und sichern auf diese Weise die Mutter gegen ein unbeabsichtigtes Verdrehen bzw. Lösen, siehe Fig.5.

Die Nocken 7 weisen die Form eines Kugelabschnitts auf, während die Vertiefungen 5 entsprechend gegenförmig ausgebildet sind. Die Vertiefungen 5 sind auf der Mutter 1 im radial äußeren Bereich der Stirnfläche la ringförmig mit gleichem Abstand um die Drehachse 8 angeordnet. Die Nocken 7 sind entsprechend mit gleichem Abstand von der Drehachse 8 auf dem Gegenstück 2 angeordnet.

Aus Fig.1 und 5 ist ersichtlich, daß die mit dem Gegenstück 2 in Berührung kommende Stirnfläche la nicht eben ausgestaltet ist, sondern vielmehr einen Ansatz 9 aufweist, der mit einer Aussparung 10 im Gegenstück 2 zusammenwirkt. Ansatz 9 und Aussparung 10 bewirken im wesentlichen eine Justierung der Mutter 1 auf dem Gegenstück 2, so daß die Nocken 7 mit den Vertiefungen 5 in Eingriff kommen können. Es sind diesbezüglich jedoch auch andere Ausgestaltungen der Mutter und des Gegenstücks denkbar.

Während auf der Mutter eine Vielzahl von Vertiefungen 5 ringförmig und mit gleichem Abstand anzuordnen sind, ist es auf dem Gegenstück ausreichend, wenigstens eine Nocke 7 vorzusehen. Im vorliegenden Ausführungsbeispiel sind deren drei vorgesehen. Selbstverständlich kann im Rahmen der Erfindung die Anzahl der Nocken 7 der Anzahl der Vertiefungen 5 entsprechen. Um ein sauberes Anliegen der Mutter 1 auf dem Gegenstück 2 im festgedrehten Zustand zu ermöglichen, ist jedoch der Abstand der Nocken 7 sowohl untereinander als auch von der Drehachse 8 in Übereinstimmung mit den Abständen der Vertiefungen 5 auf der Mutter vorzusehen.

Die Höhe h (siehe Fig.5) der Nocken 7 ist so bemessen, daß die Nocken beim Festdrehen der Mutter 1 mit den Vertiefungen 5 erst kurz vor Erreichen des End-Drehmoments in Eingriff kommen. Im letzten Stadium des Festdrehens der Mutter 1 rutschen die Nocken 7 von einer Vertiefung 5 in die nächste. Die abgerundete Form der Nocken ermöglicht es, daß auch in diesem Stadium ein Festdrehen der Mutter 1 von Hand möglich ist. Damit dieses Rutschen der Nocken 7 von einer Vertiefung 5 in die nächste überhaupt möglich ist, ist die Mutter 1 aus elastischem Material, wie beispielsweise aus thermoplastischem Kunststoff, herzustellen. Die Flexibilität derartigen Materials ermöglicht insbesondere im Bereich der radial außen liegenden Vertiefungen 5 ein Anheben der Mutter 1 gegenüber dem Gegenstand 2, wenn sich die Nocken 7 gerade zwischen zwei Vertiefungen 5 befinden.

Im festgedrehten Zustand der Mutter 1 befinden sich alle Nocken 7 in je einer Vertiefung 5. In diesem Zustand ist die Mutter selbst bei starken Vibrationen zuverlässig gegen ein unbeabsichtigtes Verdrehen bzw. Lösen geschützt.

Um die Flexiblität der Mutter 1 insbesondere im Bereich der Vertiefungen 5 noch weiter zu erhöhen, kann wenigstens eine Nut vorgesehen werden. Das Ausführungsbeispiel der Fig.1 bis 5 weist eine konzentrisch um die Drehachse 8 verlaufende Nut 11 auf, die in der mit dem Gegenstück 2 in Berührung kommenden Stirnfläche 1a der Mutter 1 mündet. Die Tiefe der Nut ist dabei entsprechend der gewünschten Erhöhung der Flexibilität zu wählen, wobei die Stabilität der Mutter 1 zu berücksichtigen ist.

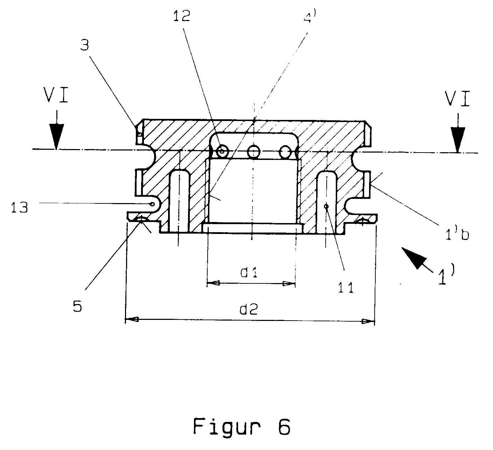

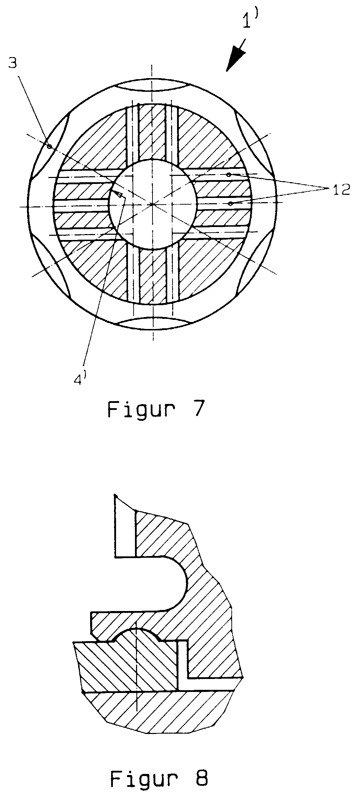

In den Fig.6 und 7 ist ein zweites Ausführungsbeispiel eines Befestigungssystems dargestellt, wobei die Änderungen gegenüber dem ersten Ausführungsbeispiel nur bei der Mutter auftreten. Zum besseren Verständnis werden gleiche Teile mit den gleichen Bezugszeichen des ersten Ausführungsbeispieles versehen.

Im Gegensatz zu der im ersten Ausführungsbeispiel beschriebenen Mutter 1 weist die Mutter 1' des zweiten Ausführungsbeispieles Querlöcher 12 auf. Diese Querlöcher dienen insbesondere bei Anwendungen mit Magnetventilen zur Entlüftung. Diese Querlöcher 12 sind dann vorzusehen, wenn keine Durchgangsbohrung 4 wie im ersten Ausführungsbeispiel, sondern eine Sackbohrung 4' Verwendung findet.

Das Vorhandensein der Querlöcher 12 schränkt jedoch die Tiefe der Nut 11 ein. Sollte die zur Verfügung stehende Tiefe der Nut 11 nicht ausreichen, um die notwendige Flexibilität im Bereich der Vertiefungen 5 bereitzustellen, so kann eine weitere Nut 13 vorgesehen werden. Die Nut 13 ist, wie sich aus Fig.6 ergibt, mit relativ geringem Abstand über den Vertiefungen 5 in der radialen Umfangsfläche 1b angeordnet. Diese zusätzliche Nut 13 ermöglicht, den durch eine verringerte Tiefe der Nut 11 entstehenden Flexibilitätsverlust auszugleichen. Im Rahmen der Erfindung kann statt der Nut 11 lediglich die Nut 13 vorgesehen werden.

Bei den oben beschriebenen beiden Ausführungsbeispielen sind die Vertiefungen 5 einstückig mit der Mutter ausgebildet, während die Nocken 7 auf dem Gegenstück 2 vorgesehen sind. Im Rahmen der Erfindung ist es jedoch auch denkbar, die Nocken auf der Mutter und die Vertiefungen auf dem Gegenstück auszubilden. In diesem Fall ist es jedoch zweckmäßig, sowohl die Vertiefungen als auch die Nocken ringförmig mit gleicher Anzahl und gleichem Abstand anzuordnen, um ein Verkanten der Mutter zu vermeiden.

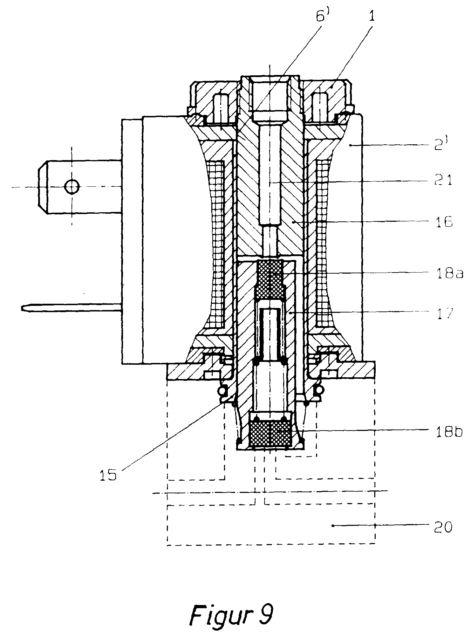

In Fig.9 wird ein Befestigungssystem für eine Spule bei einem Magnetventil beschrieben. Hierbei wird das Gegenstück durch eine Spule 2' gebildet. In die Durchgangsbohrung 6' der Spule 2' wird eine Ankerführung 15 mit einem Magnetkern 16 und einem Anker 17 eingeführt, die mit der Mutter 1 an der Spule 2' befestigt wird. Der bewegliche Anker 17 weist an beiden Enden Dichteinsätze 18a, 18b auf. Der mit einem Ventilsitz am Magnetkern 16 in Verbindung kommende Dichteinsatz 18a des Ankers 17 dient zum Öffnen oder Verschließen der durch die Mutter 1 geführten Entlüftungsleitung 21. Der gegenüberliegende Dichteinsatz 18b wirkt mit einem Ventilsitz in einem gestrichelt dargestellten Ventilgehäuse 20 zusammen. Je nach Position des Ankers 17 lassen sich verschiedene Ventilstellungen erreichen.

Das Ineinandergreifen der Vertiefungen und Nocken der Befestigungsmutter 1 erfolgt auf gleiche Art und Weise wie beim ersten und zweiten Ausführungsbeispiel. Je nach Bedarf kann bei dem in Fig.9 gezeigten Ausführungsbeispiel sowohl die Mutter 1 des ersten Ausführungsbeispieles als auch die Mutter 1' des zweiten Ausführungsbeispieles zur Anwendung kommen.

In allen aufgezeigten Fällen kommt es darauf an, daß die Mutter 1 im Bereich der Vertiefungen 5 so flexibel ist, daß ein Festdrehen der Mutter von Hand möglich ist. Dazu ist es zweckmäßig, die Höhe h der Nocken 7 auf dem Gegenstück so festzulegen, daß sie etwa 1 bis 10 Prozent der halben Differenz des Durchmessers der Mutter $d_2$ und der Bohrung $d_1$, vorzugsweise 5 Prozent der halben Differenz, beträgt (siehe Fig.6). Nimmt man beispielsweise an, daß der Durchmesser $d_2$ der Mutter 1, 1' 20 mm, und der Durchmesser $d_1$ der Durchgangsbohrung 4, 4' etwa 8 mm beträgt, so ergibt sich für die Höhe h:

$$h = (20\ mm - 8\ mm) / 2 * 5\ \% = 0{,}3\ mm$$

Der Radius der die Form der Nocke 7 bildenden Kugel sollte deutlich größer als die Höhe des Vorsprungs gewählt werden. Bei einer Höhe von 0,3 mm könnte der Radius etwa 1,5 mm betragen. Auf diese Weise entstehen relativ flache abgerundete Nocken, die auch im letzten Stadium des Festdrehens der Mutter eine Betätigung der Mutter von Hand erlauben.

Die obigen Angaben zur Dimensionierung der Nocken stellen jedoch nur Richtwerte dar. Um die nötige Flexibilität der Mutter im Bereich der Vertiefungen zu erreichen, spielt neben der Ausgestaltung der Vorsprünge vor allem auch die Dimensionierung der Nuten und das für die Mutter verwendete Herstellungsmaterial eine große Rolle, so daß die Anpassung auf die Art der Anwendung abzustimmen ist.

Vorteilhaft kann es insbesondere sein, der Vertiefung einen größeren Radius als dem Nocken zu geben. Dadurch entsteht ein flacher Ein- bzw. Auslaufwinkel, so daß die Mutter besser über den Nocken gleitet.

**Patentansprüche**

1. Befestigungssystem, enthaltend eine Mutter (1, 1') und ein Gegenstück (2, 2'), wobei zur Verdrehsicherung der Mutter (1, 1') wenigstens zwei als Vorsprung (7) und Vertiefung (5) ineinandergreifende Befestigungselemente vorgesehen sind, wobei die Mutter (1, 1') aus elastischem Material besteht und einstückig mit einem der beiden Befestigungselemente (5; 7) ausgebildet ist,
dadurch gekennzeichnet,
daß in der Mutter (1, 1') zur Erhöhung der Flexibilität der Mutter im Bereich der Befestigungselemente (5; 7) wenigstens eine Nut (11, 13) vorgesehen ist.

2. Befestigungssystem nach Anspruch 1, dadurch gekennzeichnet, daß eine Vielzahl der einstückig mit der Mutter (1, 1') ausgebildeten Befestigungselemente (5; 7) auf der mit dem Gegenstück (2, 2') in Berührung kommende Stirnfläche (1a) der Mutter (1, 1') ringförmig um die Drehachse (8) der Mutter (1, 1') angeordnet sind.

3. Befestigungssystem nach Anspruch 2, dadurch gekennzeichnet, daß die Befestigungselemente (5; 7) im radial äußeren Bereich der Stirnfläche (1a) angeordnet sind.

4. Befestigungssystem nach einem der vorhergehenden Ansprüche, dadurch gekennzeichnet, daß das Gegenstück (2, 2') mit wenigstens einem anderen Befestigungselement (7; 5) ausgebildet ist.

5. Befestigungssystem nach einem der vorhergehenden Ansprüche, dadurch gekennzeichnet, daß der Vorsprung (Nocke 7) eine abgerundete und die Vertiefung (5) eine entsprechend gegenförmige Ausgestaltung aufweisen.

6. Befestigungssystem nach einem der vorhergehenden Ansprüche, dadurch gekennzeichnet, daß der Vorsprung (Nocke 7) die Form eines Kugelabschnitts aufweist.

7. Befestigungssystem nach Anspruch 1, dadurch gekennzeichnet, daß die Nut (11) konzentrisch um die Drehachse (8) der Mutter (1, 1') angeordnet ist und in der mit dem Gegenstück (2, 2') in Berührung kommenden Stirnfläche (1a) der Mutter mündet.

8. Befestigungssystem nach Anspruch 1, dadurch gekennzeichnet, daß die Nut (13) in der radialen Umfangsfläche (1'b) der Mutter (1') vorgesehen ist.

9. Befestigungssystem nach einem der vorhergehenden Ansprüche, dadurch gekennzeichnet, daß die Mutter (1, 1') von Hand betätigbar ist.

10. Befestigungssystem nach einem der vorhergehenden Ansprüche, dadurch gekennzeichnet, daß die Mutter (1, 1') nach Art einer Rändelmutter ausgebildet ist.

11. Befestigungssystem nach einem der vorhergehenden Ansprüche, dadurch gekennzeichnet, daß die Mutter (1, 1') eine mit einem Innengewinde versehene Bohrung (4, 4') aufweist.

**12.** Befestigungssystem nach Anspruch 6, dadurch gekennzeichnet, daß der Radius der die Form des Vorsprungs (Nocke 7) bildendenden Kugel größer als die Höhe (h) des Vorsprungs ist.

**13.** Befestigungssystem nach Anspruch 12, dadurch gekennzeichnet, daß die Höhe (h) der Vorsprünge 1 bis 10 Prozent der halben Differenz des Durchmessers der Mutter ($d_2$) und der Bohrung ($d_1$) beträgt.

**14.** Befestigungssystem nach Anspruch 1 für Spulen bei Magnetventilen, dadurch gekennzeichnet, daß das Gegenstück durch eine Spule (2') gebildet wird.

**15.** Befestigungssystem nach einem der vorhergehenden Ansprüche, dadurch gekennzeichnet, daß die Mutter (1, 1') einstückig mit einer Vielzahl von Vertiefungen (5) ausgebildet ist.

## Claims

**1.** Fastening system comprising a nut (1, 1') and a counterpart (2, 2'), wherein for protection against torsion of the nut (1, 1') at least two fastening elements are provided which interengage as a projection (7) and a depression (5), the nut (1, 1') being made from resilient material and integral with one of the two fastening elements (5; 7), characterised in that at least one groove (11, 13) is provided in the nut (1, 1') in order to increase the flexibility of the nut in the region of the fastening elements (5; 7).

**2.** Fastening system as claimed in Claim 1, characterised in that a plurality of the fastening elements (5; 7) which are integral with the nut (1, 1') are arranged in a ring around the axis of rotation (8) of the nut (1, 1') on the end face (1a) of the nut (1, 1') which comes into contact with the counterpart (2, 2').

**3.** Fastening system as claimed in Claim 2, characterised in that the fastening elements (5; 7) are arranged in the radially outer region of the end face (1a).

**4.** Fastening system as claimed in one of the preceding claims, characterised in that the counterpart (2, 2') is constructed with at least one other fastening element (7; 5).

**5.** Fastening system as claimed in one of the preceding claims, characterised in that the projection (boss 7) has a rounded shape and the depression (5) has a matching shape.

**6.** Fastening system as claimed in one of the preceding claims, characterised in that the projection (boss 7) is in the form of a spherical segment.

**7.** Fastening system as claimed in Claim 1, characterised in that the groove (11) is arranged concentrically around the axis of rotation (8) of the nut (1, 1') and opens in the end face (1a) of the nut which comes into contact with the counterpart (2, 2').

**8.** Fastening system as claimed in Claim 1, characterised in that the groove (13) is provided in the radial circumferential surface (1'b) of the nut (1').

**9.** Fastening system as claimed in one of the preceding claims, characterised in that the nut (1, 1') can be actuated by hand.

**10.** Fastening system as claimed in one of the preceding claims, characterised in that the nut (1, 1') is constructed as a knurled nut.

**11.** Fastening system as claimed in one of the preceding claims, characterised in that the nut (1, 1') has a bore (4, 4') provided with an internal thread.

**12.** Fastening system as claimed in Claim 6, characterised in that the radius of the sphere which forms the shape of the projection (boss 7) is greater than the height (h) of the projection.

**13.** Fastening system as claimed in Claim 12, characterised in that the height (h) of the projections is 1 to 10 percent of half the difference between the diameter of the nut ($d_2$) and of the bore ($d_1$).

**14.** Fastening system as claimed in Claim 1 for coils in solenoid valves, characterised in that the counterpart is formed by a coil (2').

**15.** Fastening system as claimed in one of the preceding claims, characterised in that the nut (1, 1') is constructed integrally with a plurality of depressions (5).

## Revendications

**1.** Système de fixation, comprenant un écrou (1, 1') et une pièce complémentaire (2, 2'), au moins deux éléments de fixation s'enclenchant l'un dans l'autre et consistant en un bossage (7) et un alvéole (5) étant prévus pour le blocage en rotation de l'écrou (1, 1'), l'écrou (1, 1') étant en matière élastique et étant réalisé monobloc avec l'un des éléments de fixation (5 ; 7),
caractérisé

en ce qu'au moins une gorge (11, 13) est prévue dans l'écrou (1, 1') dans la région des éléments de fixation (5 ; 7) pour l'élévation de la souplesse de l'écrou.

2. Système de fixation selon la revendication 1, caractérisé en ce que de multiples éléments de fixation (5 ; 7) réalisés monobloc avec l'écrou (1, 1') sont disposés en anneau autour de l'axe de rotation de l'écrou (1, 1') sur la surface frontale (1a) de l'écrou (1, 1') qui entre en contact avec la pièce complémentaire (2, 2').

3. Système de fixation selon la revendication 2, caractérisé en ce que les éléments de fixation (5 ; 7) sont disposés dans la région radialement extérieure de la surface frontale (1a).

4. Système de fixation selon l'une des revendications précédentes, caractérisé en ce que la pièce complémentaire (2, 2') est réalisée avec au moins un autre élément de fixation (7 ; 5).

5. Système de fixation selon l'une des revendications précédentes, caractérisé en ce que le bossage (ergot 7) présente une conformation arrondie et l'alvéole (5) présente une conformation complémentaire correspondante.

6. Système de fixation selon l'une des revendications précédentes, caractérisé en ce que le bossage (ergot 7) présente la forme d'une section de sphère.

7. Système de fixation selon la revendication 1, caractérisé en ce que la gorge (11) est disposée concentriquement autour de l'axe de rotation (8) de l'écrou (1, 1') et débouche dans la surface frontale (1a) de l'écrou qui entre en contact avec la pièce complémentaire (2, 2').

8. Système de fixation selon la revendication 1, caractérisé en ce que la gorge (13) est prévue sur la surface circonférentielle radiale (1'b) de l'écrou (1').

9. Système de fixation selon l'une des revendications précédentes, caractérisé en ce que l'écrou (1, 1') peut se manipuler à la main.

10. Système de fixation selon l'une des revendications précédentes, caractérisé en ce que l'écrou (1, 1') est réalisé à la façon d'un écrou moleté.

11. Système de fixation selon l'une des revendications précédentes, caractérisé en ce que l'écrou (1, 1') comporte un trou taraudé (4, 4').

12. Système de fixation selon la revendication 6, caractérisé en ce que le rayon de la sphère déterminant la forme du bossage (ergot 7) est plus grand que la hauteur (h) du bossage.

13. Système de fixation selon la revendication 12, caractérisé en ce que la hauteur (h) du bossage correspond à 1 à 10 pour cent de la moitié de la différence du diamètre de l'écrou ($d_2$) et de celui du trou ($d_1$).

14. Système de fixation selon la revendication 1, destiné à des bobines d'électrovannes, caractérisé en ce que la pièce complémentaire est formée d'une bobine (2').

15. Système de fixation selon l'une des revendications précédentes, caractérisé en ce que l'écrou (1, 1') est réalisé monobloc avec de multiples alvéoles (5).

Figur 1

Figur 2

Figur 3

Figur 4

Figur 5

Figur 6

Figur 7

Figur 8

Figur 9